# EUROPEAN PATENT SPECIFICATION

(11) **EP 0 398 204 B1**
(45) Date of publication and mention of the grant of the patent: **14.12.1994**
(21) Application number: 90109005.0
(22) Date of filing: 12.05.1990
(51) Int. Cl.: H04N 1/32, G06F 15/40, G06F 15/60, H04L 12/54

(54) **Automatic routing of documents sent over fax network between data processing systems**
Automatische Wegsuche von über das Facsimile-Netzwerk zwischen Datenverarbeitungssystemen versandten Dokumenten
Routage automatique de documents envoyés par le réseau de fac-similé entre systèmes de traitement de données

(30) Priority: 15.05.1989 US 352592
(43) Date of publication of application: 22.11.1990
(73) Proprietor: International Business Machines Corporation, Armonk, N.Y. 10504 (US)
(72) Inventor: Nickle, Allen Francis, Rockville, MD 20855 (US); Somerville, Peter John, Bethesda, MD 20852 (US)
(74) Representative: Teufel, Fritz, Dipl.-Phys.

(56) References cited:
- EP-A- 0 284 924
- PATENT ABSTRACTS OF JAPAN vol. 12, no. 435 (E-683)(3282) 16 November 1988,& JP-A-63 169869 (RICOH CO LTD) 13 July 1988,

## Description

The invention relates to the automatic routing of a document transmitted from a first data processing system through a facsimile network to a second data processing system.

Prior art systems are known in which a computer, provided with a facsimile or fax card, functions as a fax device for transmitting and receiving documents over a fax network see e.g. JP-A-63 169 869 (RICOH). Such systems transmit on a point to point basis, i.e., from one computer or workstation to another computer or workstation where the received document is printed or displayed.

The invention is as set out in the claims.

The present invention is designed to transmit and receive documents in a complex network in which a fax network is connected between at least two data processing systems each of which has plural workstations capable of both sending and receiving documents. In such a system, it is desirable to minimize or eliminate manual or operator intervention in order to effectively route a document originating at a sending workstation in one data processing system to the desired workstation in the other data processing system.

Thus, one of the objects of the invention is to automatically route a document sent from one data processing system over a fax network to the desired destination recipient in a second data processing system having a plurality of workstations.

Another object is to provide a system for the automatic routing of transmitted documents between two data processing systems in which each system has a dedicated workstation for sending and receiving documents over a fax network.

Still another object is to transmit text files through a fax network and automatically route such files to a recipient without requiring operator intervention at the receiving end.

Other objects and advantages of the invention will be apparent from the following description taken in connection with the accompanying drawing wherein:
Fig. 1 is a functional block diagram of a system or network embodying the invention;
Fig. 2 is a functional block diagram of a server processor shown in Fig. 1;
Fig. 3 is a schematic diagram of a text document;
Fig. 4 is a schematic diagram of a display screen menu for a cover transmittal page;
Fig. 5 is a schematic diagram showing a merged cover transmittal page and text document;
Fig. 6 is a flow diagram of a file transmit routine performed by the network shown in Fig. 1; and
Fig. 7 is a flow diagram of a file receive routine performed by the network shown in Fig. 1,

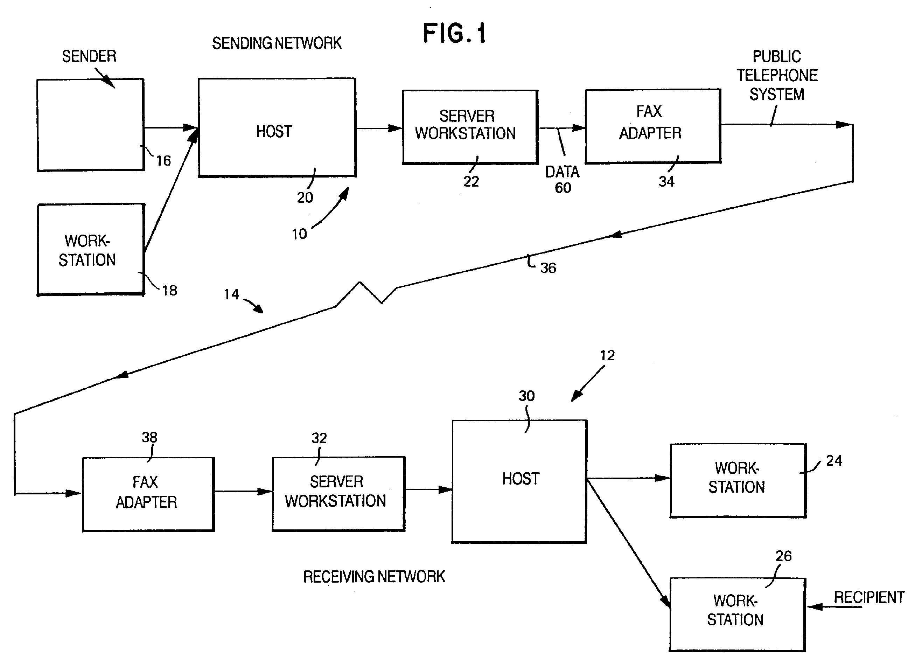

Referring now to the drawing, Fig. 1 shows a system in which a first data processing system 10 is connected to a second data processing system 12 through a fax network 14. System 10 comprises a plurality of workstations 16 and 18 connected to a host system 20, the latter in turn being connected to a server processor 22. System 12 similarly comprises a plurality of workstations 24 and 26 connected to a host system 30 which is also connected to a server processor 32. Fax network 14 comprises fax adapters 34 and 38 connected to a telephone link 36 and to server processors 22 and 32 respectively, as shown.

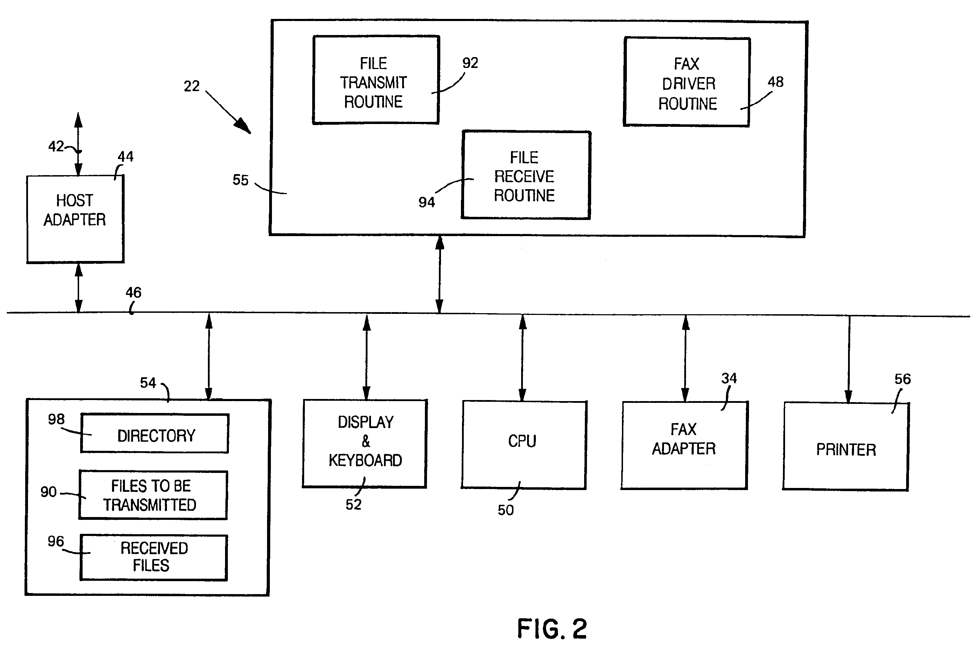

Workstations 16, 18, 24 and 26 and server processors 22 and 32 are preferably personal computers such as the IBM Personal Computer AT or an IBM Personal System/2. Because of the similarity of the workstations and server processors, only one need be described in any detail. As shown in Fig. 2, processor 22 comprises a host adapter 44 connected to cabling 42 which leads to host 10. This adapter is in turn connected to bus 46 which further interconnects a main memory 48, central processing unit (CPU) 50, display and keyboard 52, disk storage 54, graphics printer 56 and fax adapter 34. Processor 22 further includes a memory 55 into which various programs are stored for execution thereof and carrying out the operations hereafter described.

Host systems 10 and 12 preferably are either an IBM Virtual Machine (VM) system or an IBM Application System/400. Fax adapters 34 and 38 are a commercially available fax adapter card such as a Gammafax PC-to-FAX product sold by GammaLink Corporation. Such product includes the necessary software or program to operate the card, such program being the fax adapter driver 48 shown loaded in memory 55 in Fig. 2. It is thus seen that the system as described thus far comprises commercially available devices including the software necessary to operate the hardware. While the various components thus far described are individually old, the overall combination is believed new, and the manner in which this new combination is operated is also believed new.

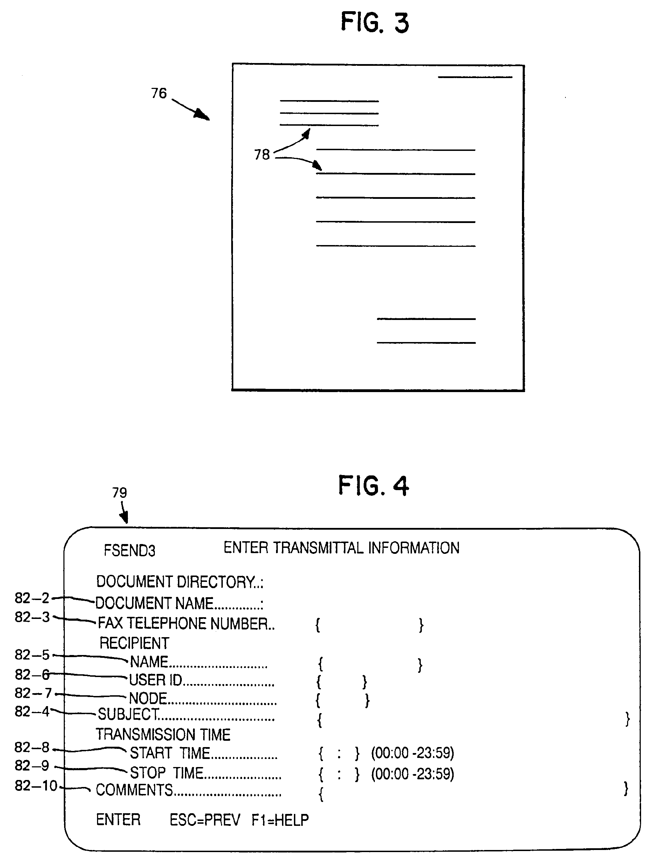

To further understand the invention, let us assume that a user at workstation 16 wishes to send a text file to another user or recipient that has access to the system through workstation 26. The type of file to be sent in this example will be a text file representing a simple letter 76 containing a plurality of lines of text 78 as illustrated in Fig. 3. This text file is stored in conventional fashion in the disk storage of workstation 16, the file being identified by its path name including the drive, directory(ies) and file name. The user or sender initiates the sending operation by pressing a predetermined function key on the keyboard of workstation 16 that is programmed so that upon actuation of such function key, a window 79 appears on the display screen of workstation 16 containing the fields shown in Fig. 4. The user thereupon enters the requested information within the various fields of window 79.

In the first field, "Document directory", the user enters the drive letter and directory paths in which the file is stored in the user's workstation. Then, the user enters a document name in the second field identifying the specific file. Next, the fax telephone number of phone link 36 is entered to indicate to the system the line or link over which the file is to be transmitted. This number is also unique to the receiving station, namely server processor 32 which is dedicated to interconnecting host 30 with the fax network 14. This specific telephone number therefore is unique to all of the workstations 24 and 26 associated with host 30. The user then enters recipient information including the recipient's name, user id and node. In order for a file to be sent to a particular recipient, it is necessary to enter the node which the user is at, relative to host 30 and a user id to signify which of the many different users at such node is to receive the document. The entry of the user id is critical to the operation of the invention since it is the piece of information that is later analyzed to decide that the file will be sent as a binary file instead of a fax file. The .reason for this is that fax machines have no user id. The user may also enter the time of day when the transmission is to occur, the time after which if the file is not sent, the system will try to send it on the next day at the desired time of transmission, and various comments.

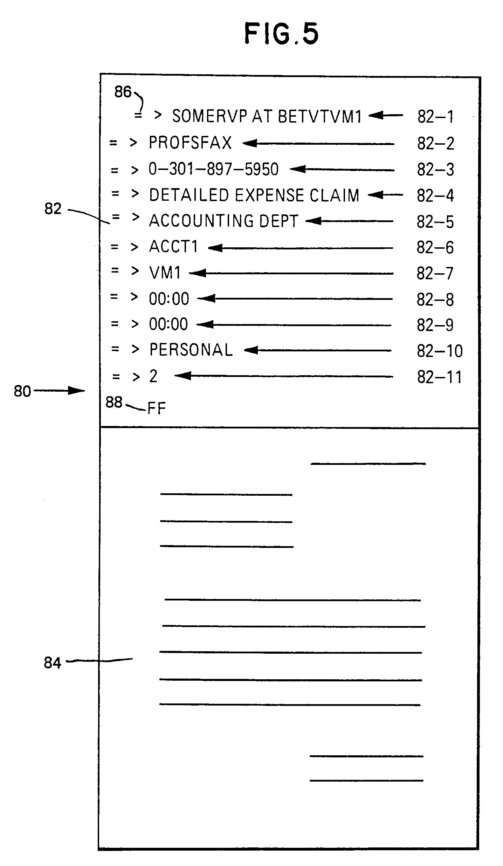

After completing entry of the transmittal information, the user then actuates a predetermined key whereupon workstation 16 creates a transmittal file 80 such as shown in Fig. 5.

Transmittal file 80 includes a transmittal record 82 concatenated or merged with text file 84. The text file is that which was stored in workstation 16 and contains the letter to be transmitted to the recipient. Transmittal record 82 includes a predetermined number of fields each headed by a two character tag or delimiter string 86. Such string includes an a equal sign (=) and the symbol (>) for greater than. There are 11 fields 82-1 thru 82-11 headed by such tags and the end of the transmittal record is signified by a form feed character 88. The respective fields are: 82-1 is the sender's user's id and node; 82-2 is the document name; 82-3 is the fax phone number; 82-4 is the subject of the letter; 82-5 is the recipient's name; 82-6 is the recipient's user id; 82-7 is the recipient's node; 82-8 is the start time for transmission; 82-9 is the stop time; 82-10 are comments; and 82-11 includes a notification code 0, 1 or 2 which indicates respectively to not notify the sender, notify the sender with a VM message indication when the file was sent or that it failed, or notifying the sender with a VM note when the file was sent or that it failed. These fields are located in a predetermined sequential order so that the fields can be identified and used at the receiving station. The information which the user entered previously is stored in such fields.

Transmittal file 80 is uploaded from sender workstation 16 into host 20 from where it is downloaded into storage 54 of server processor 22. A directory 98 is located in storage 54 and contains the names of files 90 to be transmitted. Server 22 also includes a file transmit routine 92 the operation of which is explained below. In connection with the overall system, it is designed to allow the two way transmission of files between data processing systems 10 and 12 over the fax network. Where a user is a sender at one point and time, he or she might also be a recipient at a later point in time. Both server processors 22 and 32 are equipped to perform both the transmission and the receiving functions. To accomplish this, a file receive routine 94 is also stored in processor 22 for performing the operations explained below. Further, directory 98 also contains the names of received files 96, including both binary and converted fax files.

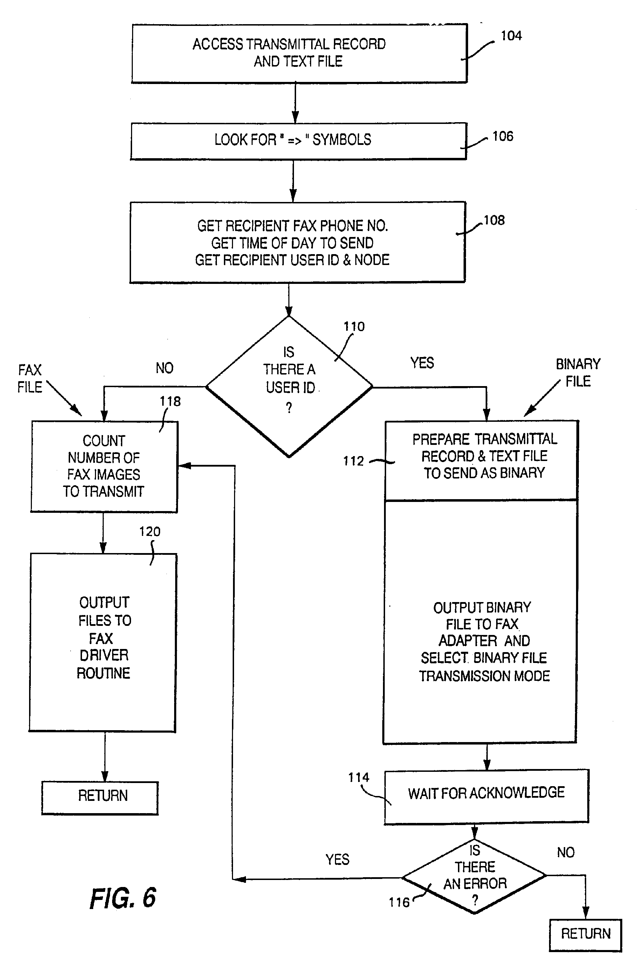

Fig. 6 shows the steps carried out by file transmit routine 92 which is executed when server processor 22 has received a file to be transmitted. At the start of execution of this routine, step 104 accesses transmittal file 80 which contains transmittal record 82 and text file 84. Step 106 then analyses the transmittal record looking for the various tags 86 to extract in step 108 the recipient's fax phone number, time of day to send, and recipient's user id and node. Step 110 determines whether a user id is contained in the transmittal record. If a user id is present, indicating that the file is to be transmitted as a binary file, the routine proceeds to step 112.

Step 112 then starts execution of the fax driver routine 48 to cause the transmittal file 80 to be sent as a binary file to the desired receiving location. Step 114 creates a waiting operation which ends upon receiving an acknowledgement that the transmission has occurred. On receiving the acknowledgment signal, step 116 then determines if there was an error and if none was present control is returned. An error would occur if the phone link attempted to transmit a binary file to a receiving location that could not receive a binary file, i.e., it could receive only fax files.

In the event such an error occurs or in the event that step 110 makes a negative determination, then steps 118 and 120 proceed to convert the transmittal file 80 to a fax file and transmit it in the standard CCITT format. To accomplish this, step 118 counts the number of fax images that are to be transmitted, there being one image per page of text file. Step 120 then signals fax driver routine to transmit the fax images. Afterwards, the routine returns.

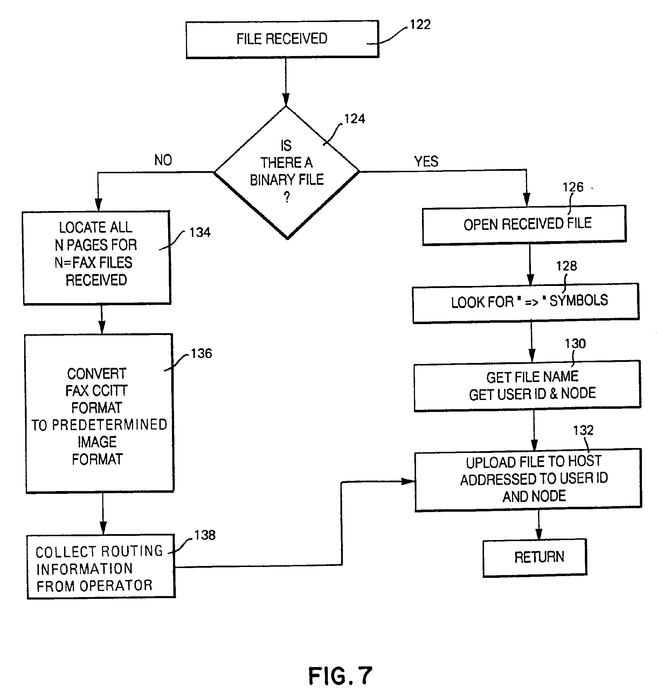

Referring to Fig. 7, when a file is received in step 122 by server processor 32 at the receiving station, file receive routine 94 is executed to carry out the automatic routing operation. Step 124 first determines whether the received file is a binary file which determination can readily be done since the receiving fax adapter knows it is receiving a binary file because of the handshake protocol that occurs between the transmitting and receiving fax adapters. Step 126 opens the file and in step 128, a search is made through the transmittal record 82 for the various tag symbols to pick out in step 130 the file name, user id and node. The file 80 is then uploaded in step 132 into host 30 which thereupon places the file as a document in the VM library in the manner customarily done in a VM system. This host system then "mails" the document to the specific recipient identified by the user id. The user upon logging onto a workstation and connecting to the VM system by entering the user id, can then open the user mail, receive the document and either view it from the VM system or download the document to the user's workstation for viewing or printing. After the uploading occurs in step 132, routine 94 returns control.

If as a result of step 124 a determination is made that the received file is not a binary file, in other words it is a fax file, step 134 locates all of the pages for the fax file received and step 136 then convert the fax format CCITT into a conventional predetermined image format. Step 138 invokes the receiving station operator and collects routing information from him or her, which information is then used by routine 94 to branch to step 132 and upload the file and send it to the recipient. The user would then access the image format through conventional programs and obtain the converted transmittal file including the letter. Since this latter path, steps 134-138 require operator intervention, it is more costly than had the file been automatically routed as would a binary file.

## Claims

1. A system comprising:
a first data processing system (10) including
a first workstation (16, 18) for storing a text file representing a document (76, 84) to be transmitted to a recipient at a second workstation (24, 26) remote from said workstation, said first workstation being operative to create from user information and store a transmittal record (80) including a file name for said text file and a unique identification for said recipient;
a fax network (14) selectively operable in fax and binary modes to respectively transmit binary files and fax files over a phone link from a transmitting part of said fax network to a receiving part of said fax network;
a first fax adapter (34) connected to said first data processing system and said fax network, said first fax adapter being operative to store a transmittable file including said text file and said transmittal record received from said first workstation, said first fax adapter being operative in response to said unique identification of a recipient to signal said fax network and select said binary mode of operation to thereby transmit said transmittable file as a binary file over said fax network;
a second fax adapter (38) connected to said receiving part of said fax network and being operative to receive said transmittable file therefrom;
a second data processing system (12) including a server processor (32), a host system (30) connected to said server processor, and a plurality of workstations (24, 26) connected to said host system, said server processor being connected to said second fax adapter and including storage means for receiving said transmittable file from said second fax adapter, said server processor including storage means for storing said transmittable file, said server processor further including means operable to extract said transmittal information from said transmittable file and upload said text file into said host system using said file name and said recipient identification;
said host system being operative in response to said upload to store said text file for use by said recipient and to send a message to said recipient indicating said text file is available for use by said recipient.

2. System in accordance with claim 1 wherein:
said first data processing system comprises a second host system (20) connected to said first workstation and to said first fax adapter, said second host system being operable to transmit said text file and said transmittal information from said first workstation to said first fax adapter by uploading it up into said second host system, storing it in said second host system, and downloading it form said second to said first fax adapter.

3. System in accordance with claim 1 or 2 wherein:
said first workstation is operative to create a transmittal record (80) from said transmittal information (82), said transmittal record comprising a plurality of predetermined fields (82-1 to 82-11) for containing said transmittal information including a first field for said file name and a second field for said unique identification;
said first fax adapter being responsive to the presence of said unique identification in said second field to signal said fax network and select said binary mode.

4. System in accordance with claim 3 wherein:
said first fax adapter is responsive to the absence of said unique identification in said second field to signal said fax network and select said fax mode.

5. System in accordance with any one of claims 1 - 4 wherein:
said server processor includes storage means for separately storing binary files and fax files, said second data processing system further including means to access said stored fax files and output such files in a form selectable by a recipient.

6. System in accordance with any one of the preceding claims comprising:
a recipient workstation (24, 26) connected to said host system and including control means responsive to a recipient inputting file name and said unique identification to output said text file to a recipient in a form selectable by said recipient.

7. System in accordance with claim 2 or any one of claims 3 - 6, wherein:
said first data processing system comprises a second server processor (22) connected between said second host (20) system and said first fax adapter (34), said second server processor being dedicated to said second host system to control the transmission of binary and fax files between said first data processing system and said fax network.

## Patentansprüche

1. Ein System, das folgendes umfaßt:
ein erstes Datenverarbeitungssystem (10), folgendes enthaltend:
eine erste Workstation (16, 18) zum Speichern einer Textdatei, die ein Dokument (76, 84) darstellt, das an einen Empfänger an einer zweiten Workstation (24, 26), die von der genannten Workstation entfernt ist, gesendet werden soll, wobei die genannte erste Workstation aus einer Benutzerinformation und aus einem Speicher einen Übertragungssatz (80) erzeugt, der einen Dateinamen für die genannte Textdatei und eine eindeutige Identifizierung für den genannten Empfänger enthält;
ein Fax-Netzwerk (14), welches selektiv im Fax- oder im Binär-Modus betrieben werden kann, um binäre Dateien beziehungsweise Fax-Dateien über eine Telefon-Anschlußleitung von einem Übertragungsteil des genannten Fax-Netzwerkes zu einem Empfangsteil des genannten Fax-Netzwerkes zu übertragen;
einen ersten Fax-Adapter (34), der mit dem genannten ersten Datenverarbeitungssystem und dem genannten Fax-Netzwerk verbunden ist, wobei der genannte erste Fax-Adapter so arbeitet, daß er eine übertragbare Datei mit der von der genannten ersten Workstation empfangenen genannten Textdatei und dem genannten Übertragungssatz speichert, wobei der genannte erste Fax-Adapter in Antwort auf die genannte eindeutige Identifizierung eines Empfängers tätig wird, um ein Signal an das genannte Fax-Netzwerk abzugeben und den genannten binären Betriebsmodus auszuwählen, um dadurch die genannte übertragbare Datei als eine binäre Datei über das genannte Fax-Netzwerk zu übertragen;
einen zweiten Fax-Adapter (38), der an den genannten Empfangsteil des genannten Fax-Netzwerkes angeschlossen ist und der so arbeitet, daß er von diesem die genannte übertragbare Datei empfängt;
ein zweites Datenverarbeitungssystem (12), das einen Server-Prozessor (32), ein an den genannten Server-Prozessor angeschlossenes Host-System (30) und eine Vielzahl von an das genannte Host-System angeschlossenen Workstations (24, 26) enthält, wobei der genannte Server-Prozessor an den genannten zweiten Fax-Adapter angeschlossen ist und Speichermittel für den Empfang der genannten übertragbaren Datei von dem genannten zweiten Fax-Adapter umfaßt, wobei der genannte Server-Prozessor Speichermittel zum Speichern der genannten übertragbaren Datei umfaßt, der genannte Server-Prozessor weiter Mittel enthält, um die genannte Übertragungsinformation aus der genannten übertragbaren Datei zu extrahieren, und die genannte Textdatei in das genannte Host-System hochzuladen, wobei der genannte Dateiname und die genannte Empfängerkennung verwendet werden;
das genannte Host-System arbeitet in Antwort auf das genannte Hochladen, um die genannte Textdatei zur Verwendung durch den genannten Empfänger zu speichern und eine Meldung an den genannten Empfänger zu senden, aus der hervorgeht, daß die genannte Textdatei zur Verwendung durch den genannten Empfänger verfügbar ist.

2. System nach Anspruch 1, bei dem:
das genannte erste Datenverarbeitungssystem ein zweites Host-System (20) umfaßt, das an die genannte erste Workstation und den genannten ersten Fax-Adapter angeschlossen ist, wobei das genannte zweite Host-System die genannte Textdatei und die genannte Übertragungsinformation von der genannten ersten Workstation zu dem genannten ersten Fax-Adapter überträgt, indem diese in das genannte zweite Host-System hochgeladen werden, in dem genannten zweiten Host-System gespeichert werden und von dem genannten zweiten zu dem genannten ersten Fax-Adapter heruntergeladen werden.

3. System nach Anspruch 1 oder 2, bei dem:
die genannte erste Workstation einen Übertragungssatz (80) aus der genannten Übertragungsinformation (82) erzeugt, wobei der genannte Übertragungssatz eine Vielzahl von vorbestimmten Feldern (82-1 bis 82-11) umfaßt, welche die genannte Übertragungsinformation enthalten, einschließlich einem ersten Feld für den genannten Dateinamen und einem zweiten Feld für die genannte eindeutige Identifizierung;
der genannte erste Fax-Adapter auf das Vorhandensein der genannten eindeutigen Identifizierung in dem genannten zweiten Feld anspricht, um an das genannte Fax-Netzwerk ein Signal abzugeben und den genannten Binärmodus auszuwählen.

4. System nach Anspruch 3, bei dem:
der genannte erste Fax-Adapter auf das Nichtvorhandensein der genannten eindeutigen Identifizierung in dem genannten zweiten Feld anspricht, um an das genannte Fax-Netzwerk ein Signal zu senden und den genannten Fax-Modus auszuwählen.

5. System nach jedem der Ansprüche 1 - 4, bei dem:
der genannte Server-Prozessor Speichermittel für die getrennte Speicherung von binären Dateien und Fax-Dateien umfaßt, wobei das genannte zweite Datenverarbeitungssystem desweiteren Mittel umfaßt, um auf die genannten gespeicherten Fax-Dateien zuzugreifen und diese Dateien in einer vom Empfänger auswählbaren Form auszugeben.

6. System nach jedem der vorangehenden Ansprüche, folgendes aufweisend:
eine Empfänger-Workstation (24, 26), die an das genannte Host-System angeschlossen ist und Steuermittel umfaßt, die auf die Eingabe eines Dateinamens durch den Empfänger und die genannte eindeutige Identifizierung ansprechen, um die genannte Textdatei einem Empfänger in einer von diesem auswählbaren Form auszugeben.

7. System nach Anspruch 2 oder jedem der Ansprüche 3 - 6, in dem:
das genannte erste Datenverarbeitungssystem einen zweiten Server-Prozessor (22) umfaßt, der zwischen dem genannten zweiten Host-System (20) und dem genannten ersten Fax-Adapter (34) angeschlossen ist, wobei der genannte zweite Server-Prozessor für das genannte Host-System dediziert ist, um die Übertragung von binären Dateien und Fax-Dateien zwischen dem genannten ersten Datenverarbeitungssystem und dem genannten Fax-Netzwerk zu steuern.

## Revendications

1. Système comprenant :
un premier système de traitement de l'information (10) comprenant
un premier poste de travail (16, 18) pour enregistrer un fichier texte représentant un document (76, 84) en vue de sa transmission à un destinataire sur un deuxième poste de travail (24, 26) distant du dit premier poste de travail, ledit premier poste de travail étant capable, à partir des informations utilisateur, de créer et de mémoriser un enregistrement de transmission (80) contenant un nom de fichier pour ledit fichier texte et une identification spécifique au dit destinataire;
un réseau de télécopie (14) sélectivement exploitable en mode télécopie ou en mode binaire pour transmettre respectivement des fichiers binaires et des fichiers télécopie, via une liaison téléphonique, entre une partie émettrice du dit réseau de télécopie et une partie réceptrice du dit réseau de télécopie;
un premier adaptateur de télécopie (34) connecté au dit premier système de traitement de l'information et au dit réseau de télécopie, ledit premier adaptateur de télécopie pouvant mémoriser un fichier transmissible comprenant ledit fichier texte et ledit enregistrement de transmission reçus en provenance du dit premier poste de travail, ledit premier adaptateur de télécopie étant capable, en réponse à ladite identification spécifique à un destinataire, de transmettre un signal au dit réseau de télécopie et de sélectionner ledit mode binaire d'exploitation pour transmettre ledit fichier transmissible sous la forme d'un fichier binaire via ledit réseau de télécopie;
un deuxième adaptateur de télécopie (38) connecté à ladite partie réceptrice du dit réseau de télécopie et pouvant recevoir ledit fichier transmissible en provenance de celui-ci;
un deuxième système de traitement de l'information (12) comprenant un processeur de serveur (32), un système central (30) connecté au dit processeur de serveur, et une pluralité de postes de travail (24, 26) connectés au dit système central, ledit processeur de serveur étant connecté au dit deuxième adaptateur de télécopie et comprenant un dispositif de mémorisation pour recevoir ledit fichier transmissible en provenance du dit deuxième adaptateur de télécopie, ledit processeur de serveur comprenant un dispositif de mémorisation pour mémoriser ledit fichier transmissible, et comprenant un dispositif pour extraire les dites informations de transmission du dit fichier transmissible et télécharger ledit fichier texte dans ledit système central en utilisant ledit nom de fichier et ladite identification de destinataire;
ledit système central étant capable, en réponse au dit téléchargement, de mémoriser ledit fichier texte à l'usage du dit destinataire et de transmettre un message au dit destinataire lui indiquant que ledit fichier texte est à sa disposition.

2. Système selon la revendication 1, dans lequel :
ledit premier système de traitement de l'information comprend un deuxième système central (20) connecté au dit premier poste de travail et au dit premier adaptateur de télécopie, ledit deuxième système central pouvant transmettre ledit fichier texte et les dites informations de transmission en provenance du dit premier poste de travail au dit premier adaptateur de télécopie en les téléchargeant dans ledit deuxième système central, en les mémorisant dans ledit deuxième système central, et en les téléchargeant du dit deuxième dans ledit premier adaptateur de télécopie.

3. Système selon la revendication 1 ou 2, dans lequel :
ledit premier poste de travail peut créer un enregistrement de transmission (80) à partir des dites informations de transmission (82), ledit enregistrement de transmission comprenant une pluralité de champs prédéfinis (82-1 à 82-11) destinés à accueillir les dites informations de transmission, un premier champ étant réservé au dit nom de fichier et un deuxième champ étant réservée à ladite identification spécifique;
ledit premier adaptateur de télécopie étant sensible à la présence de ladite identification spécifique dans ledit deuxième champ pour transmettre un signal au dit réseau de télécopie et sélectionner ledit mode binaire.

4. Système selon la revendication 3, dans lequel :
ledit premier adaptateur de télécopie est sensible à l'absence de ladite identification spécifique dans ledit deuxième champ pour transmettre un signal au dit réseau de télécopie et sélectionner ledit mode de télécopie.

5. Système selon l'une quelconque des revendications 1 à 4, dans lequel :
ledit processeur de serveur comprend un dispositif de mémorisation pour mémoriser séparément les fichiers binaires et les fichiers télécopie, ledit deuxième système de traitement de l'information comprenant, de plus, un dispositif pour accéder aux dits fichiers télécopie mémorisés et pour produire ces fichiers en sortie sous une forme sélectionnable par un destinataire.

6. Système selon l'une quelconque des revendications précédentes comprenant :
un poste de travail destinataire (24, 26) connecté au dit système central et comprenant un dispositif de contrôle sensible à l'entrée par le destinataire d'un nom de fichier et de ladite identification spécifique pour fournir ledit fichier texte à un destinataire sous une forme sélectionnable par ledit destinataire.

7. Système selon la revendication 2 ou l'une quelconque des revendications 3 à 6, dans lequel :
ledit premier système de traitement de l'information comprend un deuxième processeur de serveur (22) connecté entre ledit deuxième système central (20) et ledit premier adaptateur de télécopie (34), ledit deuxième processeur de serveur étant réservé au dit deuxième système central pour contrôler la transmission de fichiers binaires et télécopie entre ledit premier système de traitement de l'information et ledit réseau de télécopie.
